# EUROPÄISCHE PATENTSCHRIFT

(11) **EP 1 199 193 B1**
(45) Veröffentlichungstag und Bekanntmachung des Hinweises auf die Patenterteilung: **19.12.2007**
(21) Anmeldenummer: 00122689.3
(22) Anmeldetag: 18.10.2000
(51) Int. Cl.: B60C 11/16, B29D 30/66

(54) **Spike für Fahrzeugreifen**
Fixed spike for vehicle tyre
Clou fixe pour pneumatique de véhicule

(43) Veröffentlichungstag der Anmeldung: 24.04.2002
(73) Patentinhaber: Continental Aktiengesellschaft, 30165 Hannover (DE)
(72) Erfinder: Ostrovskis, Allan, 33235 Gislaves (SE)

(56) Entgegenhaltungen:
- WO-A-99/56976
- FR-A- 2 438 552
- GB-A- 1 063 936
- RU-A- 2 152 318
- US-A- 3 428 105
- US-A- 4 809 756
- PATENT ABSTRACTS OF JAPAN vol. 011, no. 196 (M-601), 24. Juni 1987 (1987-06-24) & JP 62 020705 A (AGENCY OF IND SCIENCE & TECHNOL), 29. Januar 1987 (1987-01-29)
- PATENT ABSTRACTS OF JAPAN vol. 1995, no. 04, 31. Mai 1995 (1995-05-31) & JP 07 001606 A (SUMITOMO RUBBER IND LTD), 6. Januar 1995 (1995-01-06)

## Beschreibung

Die Erfindung betrifft einen Spike für Fahrzeugreifen, insbesondere für Winterreifen von Personenkraftfahrzeugen. Um dem Spike zu ermöglichen, eine möglichst große Kraft vom Untergrunde, zum Beispiel einer vereisten oder verschneiten Straße aufzunehmen, lehrt das deutsche Gebrauchsmuster 18 50 309, die Spikes in Draufsicht - also in der Ansicht, die sich ergibt bei radialer Sicht von außen nach innen - unrund, das heißt flach oder flach-oval, auszubilden. Von solchen Spikes geht die Erfindung ausweislich des Oberbegriffs des Anspruchs 1 aus. Ein weiterer gattungsgemäßer Spike und ein gattungsgemäßes Verfahren zur Herstellung eines Fahrzeugreifens sind aus der RU-2 152 318 C1 bekannt.

Ein jeder Spike enthält eine plattenförmige Wurzel, mit der er in der Nähe der oberen Gürtellage im Reifen verankert ist. Der Teil des Spikes, der nicht die Wurzel bildet, werde im Folgenden als Spikeoberteil bezeichnet. Von Letzerem ragt zumindest ein Stück über die Lauffläche des Reifen hinaus. Die Spikewurzel kann bekanntlich genauso unrund sein wie der Spikeoberteil. Der Spikeoberteil kann einen dickeren Spiketeil aufweisen, an den sich nach radial außen hin ein verjüngter spitzenartiger Teil anschließt, der aus dem Laufflächengummi vorspringt.

Es ist eine **erste Aufgabe** der Erfindung, einen gattungsgemäßen Spike so weiterzubilden, dass ein damit ausgestatteter Reifen noch größere Kräfte vom Untergrunde aufzunehmen vermag. Es ist eine **zweite Aufgabe** der Erfindung, einen entsprechend verbesserten Reifen zu schaffen und eine **dritte Aufgabe**, einen entsprechenden Reifen herzustellen.

Die erste Aufgabe wird durch die Lehre des Anspruchs 1, die zweite Aufgabe durch die Lehre des Anspruches 5 und die dritte Aufgabe durch die Lehre des Anspruches 10 gelöst.

Durch die Ausbildung der Wurzelplatte und des Spikeoberteils mit jeweils länglichem Umriss und die etwa rechtwinklige (65° - 115°) Stellung beider Längsachsen zueinander kann die Verbiegung des Spikes erheblich vermindert werden, was das Kraftaufnahmevermögen vom Untergrunde verbessert. Die höhere Belastung der so ausgerichteten Spikewurzel selber und deren Kontakt zum umgebenden Gummi, insbesondere der oberen Gürtellage, hat sich überraschenderweise als unproblematisch erwiesen.

Die Längsachse der plattenförmigen Wurzel eines erfindungsgemäßen Spikes schließt mit der Längsachse des Oberteils einen Winkel größer Null ein, der nach Anspruch 2 , 65° - 115°, weiter bevorzugt etwa 90° ausmacht.

Das Oberteil von Spikes wird in der Laufflächenmitte zweckmäßigerweise so ausgerichtet, dass die Längsachse der etwa ovalen oder ellipsenförmigen Spikedraufsicht etwa einer Axialen entspricht. So kann dieser Laufflächenbereich größte Kräfte in Umfangsrichtung übertragen, was den Bremsweg verkürzt und die Traktion (=Vortrieb) verbessert.

Für die meisten Winterreifen ist es indessen noch wichtiger, ausreichende Querkräfte auch auf Eis übertragen zu können, um Geradesauslauf und Kurvenfahrtvermögen zu gewährleisten. Solche Kräfte können am besten die Reifenschultern übertragen, deren Flächenpresung sich bei Kurvenfahrt auf der kurvenäußeren Seite erhöht. Darum werden die Spikeoberteile in den Reifenschultern zweckmäßigerweise mindestens so weit gegenüber der Axialen gedreht eingebaut, dass die Draufsicht-Längsachse einen Winkel von mindestens 30° zur Axialen einnimmt. Für einen PKW-Winterreifen scheint ein Winkel von 45° besonders günstig zu sein, für einen LKW-Winterreifen noch mehr, beispielsweise 60°, zumal letzterer wegen des großen Raddurchmessers und der somit langen Aufstandsfläche ohnehin eine gute Längskraftübertragung aufweist. Bei einem Motorradreifen ist es sinnvoll, die Schulterspikes so auszurichten, dass die Draufsicht-Längsachse exakt in Umfangsrichtung weist zur Maximierung der Querkraftübertragungsfähigkeit. Bei Reifen für ungebremste Anhänger gilt Letzteres für alle Spikepositionen.

Für alle Spikes, deren Oberteil axial ausgerichtet ist - das heißt, dass die Längsachse der länglichen Spikedraufsicht entlang einer Axialen verläuft, so wie im vorletzten Absatz behandelt - ist der optimale Verschränkungswinkel zwischen Oberteil und Wurzel 90°. Die Wurzel ist dann im fertigen Reifen in Umfangsrichtung ausgerichtet und verleiht dem Spike geringstmögliche Verbiegung bei Kräften in Umfangsrichtung.

Für alle Spikes, deren Oberteil in Umfangsrichtung ausgerichtet ist - das heißt, dass die Längsachse der länglichen Spikedraufsicht in Umfangsrichtung verläuft, so wie am Ende des vorletzten Absatzes behandelt - ist der optimale Verschränkungswinkel zwischen Oberteil und Wurzel ebenfalls 90°. Die Wurzel ist dann im fertigen Reifen in axialer Richtung ausgerichtet und verleiht dem Spike geringstmögliche Verbiegung bei Kräften in der Axialen.

Für alle Spikes, deren Oberteil diagonal ausgerichtet ist - das heißt, dass die Längsachse der länglichen Spikedraufsicht in einem Winkel größer 0° und kleiner 90° zur Umfangsrichtung verläuft, so wie am Anfang des vorvorletzten Absatzes behandelt - lautet der optimale Verschränkungswinkel zwischen Oberteil und Wurzel nur dann 90°, wenn diese genau auf dem Äquator (=Zenith) des Reifens angeordnet sind - was aber nicht bevorzugt ist. Die Wurzel ist dann im fertigen Reifen komplementär diagonal zur Umfangsrichtung ausgerichtet, das heißt, dass zum Beispiel bei einer 30°-Drehung des Oberteiles in einem ersten Drehsinn zur Umfangsrichtung die Wurzel um 60° (=90°-30°) im inversen Drehsinn zur Umfangsrichtung ausgerichtet ist.

Für alle Spikes, deren Oberteil diagonal ausgerichtet ist und die außerhalb des Äquators des Reifens angeordnet sind - wo sie bevorzugt stehen - , weicht der optimale Verschränkungswinkel von 90° ab, und zwar umso mehr, desto balliger die Reifenlauffläche und das Paket von Gürtellagen ist, desto näher sich der Spike am Laufflächenrand befindet und desto weiter der Winkel, in dem die Draufsicht-Längsachse des Spikeoberteiles vom nächstgelegenen "reinen" Winkel 0° oder 90° abweicht. Die bisherigen Rechenergebnisse werden dahingehend gedeutet, dass die Längsachsenausrichtung für die Spikewurzel einen um einen Betrag X spitzeren Winkel zur Umfangsrichtung einnehmen sollte als sich bei einer 90°-Verschränkung zwischen Obterteil und Wurzel ergäbe. Dieser Betrag X kann für jeden Reifen anhand eine FEM-Optimierung (FEM=Berechnungsmethode mechanischer Spannungen und Verformungen mittels finiter Elemente) vom Durchschnittsfachmann bestimmt werden; er kann bis zur Hälfte des Schägstellungswinkels zur Umfangsrichtung betragen.

Neben besserem Kraftschluss zum Untergrunde bieten Reifen mit erfindungsgemäßen Spikes den Vorteil, die im Betrieb auftretende Walkarbeit des Spikes im Gummi der Reifenlauffläche zu verringern, weil wegen der Verlängerung der plattenförmigen Spikewurzel und damit des Hebelarmes zur Aufnahme des Spikekippmomentes alle Verformungswege reduziert sind. Dies senkt die Laufflächenaufwärmung im Betrieb und verzögert somit die Gummialterung, was wiederum erklärt, warum die mit der steiferen Spikeanbindung einhergehende Erhöhung der Abschälbelastung zwischen der Wurzel des Spikes und der darunter befindlichen Gummischicht auch im Dauerbetrieb zu keinen Schäden führt.

Die Erfindung wird nachfolgend anhand maßstäblicher Zeichnungen in mehreren Ausführungsbeispielen näher erläutert.

Es zeigen
- **Figur 1**: einen Spike in der bevorzugten Ausführungsform in einer Seitenansicht;
- **Figur 2**: den Spike nach Figur 1 in einer um 90° versetzten Seitenansicht in einem Reifen;
- **Figur 3**: eine Draufsicht auf den Spike nach Figur 1 und 2;
- **Figur 4**: eine Draufsicht einer anderen Spikeausführung mit einer von 90° abweichenden Verschränkung zwischen Spikeoberteil und Spikewurzel und
- **Figur 5**: eine Reifenoberfläche mit Spikes in Draufsicht.
- **Figur 6**: im Querschnitt ein Rohr zum Einschießen erfindungsgemäßer Spikes in eine Reifenlauffläche

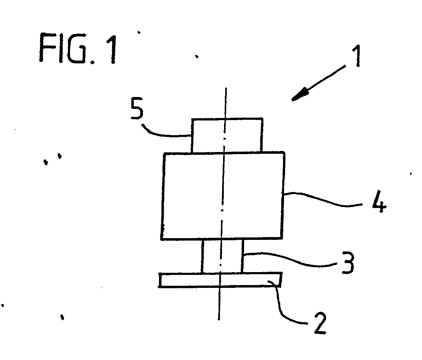

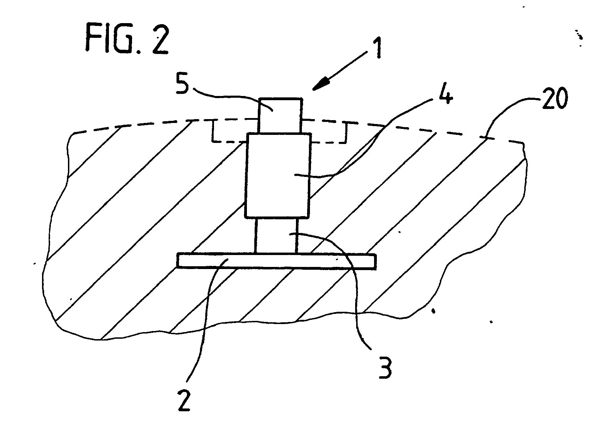

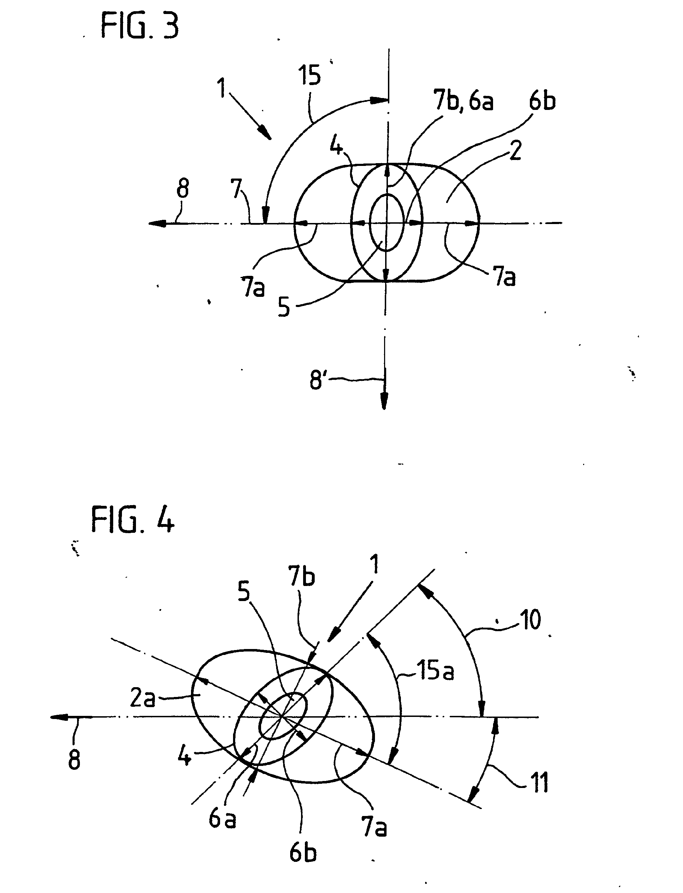

Die **Figuren 1 bis 3** gehören zu ein und demselben Ausführungsbeispiel; die **Figur 4** illustriert eine Abwandlung davon und tritt für dieses zweite Ausführungsbeispiel an die Stelle der Figur 3. Gemäß beiden Ausführungsbeispielen besteht der Spike 1 aus einer plattenförmigen Wurzel 2, die - vorzugsweise über einen Halsteil 3 - mit einem Oberteil 4, 5 einstückig verbunden ist. Das Oberteil besteht bevorzugt aus einem dickeren Spiketeil 4 und einer demgegenüber verjüngten Spikespitze 5.

Spikes 1 nach den Figuren 1 bis 4 sind dazu bestimmt, mit der Wurzel 2 und ggf. dem Halsteil 3 oder zumindest einem Teil des Teiles 4 in einer Gummilauffläche eines hier nicht dargestellten Reifens oberhalb der obersten Gürtellage fest eingebettet zu werden, so dass nur ein Stück des Oberteils aus der Lauffläche herausragt.

In beiden Spike-Ausführungsbeispielen weist die Wurzel 2 bzw. 2a einen von der Kreisform abweichenden Umriss auf, der längsgestreckt ist. Bevorzugt ist der Umriss länglich abgerundet, wie dies die Figuren 3 und 4 zeigen. Die Umrissform kann beispielsweise oval sein wie im ersten, mit Figur 3 illustrierten Ausführungsbeispiel, oder elliptisch, wie im zweiten, mit Figur 4 illustrierten Ausführungsbeispiel, oder auch gotisch, also durch zwei gleich große, entgegengesetzt gewölbte, sich schneidende Kreisausschnitte begrenzt oder sonstwie länglich, zum Beispiel in Form eines abgerundeten Viereckes.

Auch der Halsteil 3 kann, anders als dargestellt, abweichend von der Kreisform einen länglich abgerundeten (unrunden) Umriss aufweisen. Er kann aber auch - wie dargestellt - kreisrund sein. Ferner kann er dadurch entfallen, dass die Teile 3 und 4 mit identischem Querschnitt gestaltet sind.

Auch der Oberteil des Spikes 1, zumindest sein dickerer Teil 4, weist in beiden Spikeausführungsbeispielen einen unrunden, länglichen Umriss auf, wie aus den Figuren 3 und 4 hervorgeht. Die verjüngte Spitze 5 soll, wie Figur 3 zeigt, bevorzugt eine gleich ausgerichtete, längliche Umrissform aufweisen wie der anschließende dickere Teil 4. Besonders zweckmäßig sind beide Umrisse der Teile 4 und 5 zueinander ähnlich, beispielsweise (natürlich verschieden große) Ellipsen gleicher Exzentrizität und Ausrichtung, wie dies die Figuren 3 und 4 zeigen.

In beiden Spike-Ausführungsbeispielen ist die Längsachse 6a des Teiles 4 und - soweit vorhanden, wie hier - 5 anders ausgerichtet als die Längsachse 7a der Wurzel 2 bzw. 2a. Bei dem Beispiel nach den Figuren 1 bis 3 beträgt dieser Verschränkungswinkel 15 genau 90°. Beim zweiten Ausführungsbeispiel, welches Figur 4 zeigt, beträgt dieser Verschränkungswinkel 15a 70°.

Grundsätzlich kann der Spike 1 in Bezug auf die Umfangsrichtung 8 eines Reifens so eingebaut werden, dass die Längserstreckung 7a der Wurzel 2 in Umfangsrichtung 8 zu liegen kommt. Bei solcher Einbauweise, die sich insbesondere für Spikes nach dem ersten Ausführungsbeispiel bei Anordnung im Mittenbereich einer Reifenlauffläche empfiehlt, sind die Abmessungen der Wurzel 2 in Richtung 8 des Umfangs des Reifens besonders groß, wodurch die Spikeverbiegung besonders klein und somit auch die Walkarbeit des an den Spike angrenzenden Gummis beim Abrollen des Reifens klein bleiben.

Kurz, die große Länge der Wurzel 2 in der Richtung, in der Spike ansonsten zu kippen droht, trägt dazu bei, dass die vom unrunden Oberteil 4, 5 vermehrt aufgenommenen Kräfte steifer in den Reifen eingeleitet werden, so dass das Kippen des Spikes bei Lastangriff verringert ist.

Im Laufflächenmittenbereich ist die bevorzugte Längserstreckung 6a des Oberteils 4 annähernd quer zur Umfangsrichtung 8 des Reifens gelegt; kurz, die Spikeoberteile 4, 5 verlaufen dort bevorzugt axial. Hierdurch kann bei normaler Geradeausfahrt der Spike 1 durch seinen vergrößerten Querschnitt vermehrt Längskräfte (Bremsen, Beschleunigen) vom Untergrunde aufnehmen. Dabei ist es vorteilhaft, wenn der maximale Durchmesser 6a des Oberteils 4 etwa dem minimalen Durchmesser 7b der Wurzel 2 entspricht. Bevorzugt ist die längliche Ausbildung sowohl der Wurzel 2 als auch des Oberteils 4 durch einen lang-ovalen Umriss gegeben, wie dies etwa Figur 3 zeigt.

In Figur 4 ist eine etwas andere Umrissform gezeigt, wobei jedoch die länglich abgerundete grundsätzliche Umrissform beibehalten ist.

Ein erster Unterschied zwischen der Ausführung nach Figur 4 und der nach Figur 3 besteht darin, dass die Wurzel 2a nach Figur 4 von elliptischem Umriss ist, während die Wurzel 2 gemäß Figur 3 von ovalem Umriss ist.

Ein zweiter Unterschied zwischen der Ausführung nach Figur 4 und der nach Figur 3 besteht darin, dass die Längsachse 6a des dickeren Spiketeiles 4 und die Längsachse 7a der Wurzel 2 einen Winkel 15a einschließen, der von 90° abweicht. Der Winkel beträgt hier 70° und soll bevorzugt zwischen 65° und 115° liegen. Diese von 90° abweichende Verschränkung hat Vorteile für Spikes, die in Reifenschultern angeordnet werden mit diagonaler Ausrichtung der Längsachse 6a der Draufsicht des Spiekoberteiles 4, 5.

Um dies zu veranschaulichen, ist in beiden Figuen 3 und 4 horizontal gegenüber dem Zeichenblatte in Strichdoppelpunktlinie die Umfangsrichtung 8 desjenigen Reifens eingezeichnet, in den der betreffende Spike 1 bevorzugt eingebaut werden soll.

Das die Krafteinleitung zum Untergrunde verbessernde Spikeoberteil 4, 5 ist in Figur 4 um einen Winkel 10 von 45° links herum aus der Umfangsrichtung 8 herausgedreht (während es in Figur 3 um 90° aus der Umfangsrichtung 8 herausgedreht ist, also axial verläuft). Wenn auch hier die Verschränkung zwischen Wurzel 2 und Oberteil 4, 5 90°beträge, was auch möglich wäre, dann würde damit die Längsachse 7a der Spikewurzel 2a um 45° rechts herum aus der Umfangsrichtung 8 herausgedreht; sie (7a) ist indessen aber nur um einen Winkel 11 von 25° rechts herum aus der Umfangsrichtung 8 herausgedreht, was wegen der Abplattung der zweidimensional gekrümmten Reifenlauffläche zu einer günstigeren Belastung führt. Um diesen Vorteil am fertigen Reifen zu ernten, muss dieser Spike 1 mit einem Verschränkungswinkel 15a von nur 70° anstelle von 90° (siehe Bezugszeichen 15 in Figur 3) gefertigt sein.

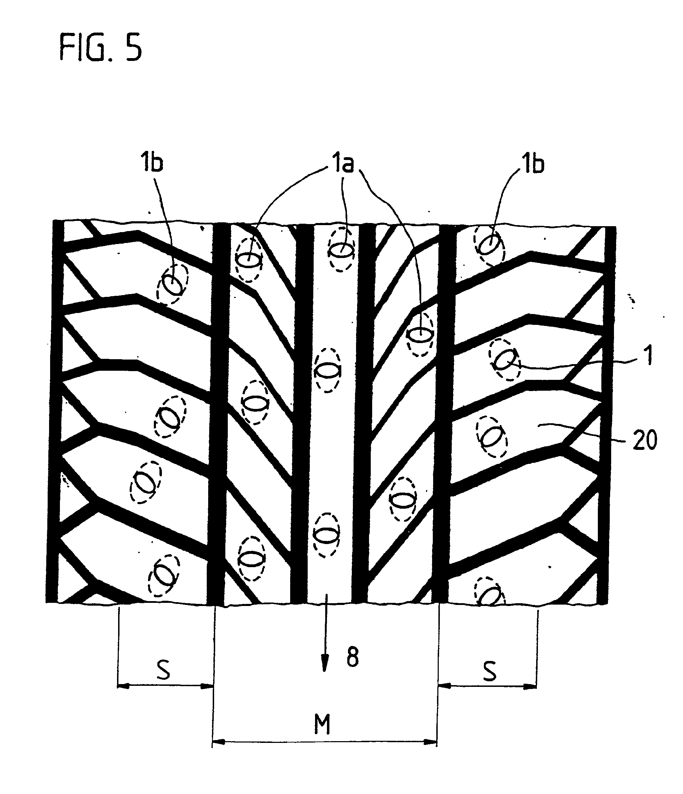

Wie **Figur 5** zeigt, sind in einer Lauffläche 20 eines Reifens bevorzugt sowohl Spikes 1a mit rechtwinkliger Verschränkung der Längsachsen 6a und 7a von Oberteil und Wurzel als auch Spikes 1b mit von 90° abweichender Verschränkung der Längsachsen 6a und 7a von Oberteil und Wurzel eingeschossen. Dabei sind erstere Spikes 1a - wie hier gezeigt - zweckmäßigerweise im Laufflächenmittenbereich M angeordnet und zwar zweckmäßigerweise so ausgerichtet, dass die Wurzel-Längsachsen 7a in die Umfangsrichtung 8 weisen, sodass die Oberteil-Längsachsen 6a axial verlaufen und somit der Längskraftübertragung dienen. Hingegen sind zweitgenannte Spikes 1b - wie hier ebenfalls gezeigt - zweckmäßigerweise in den beiden Schultern S der Lauffläche angeordnet und zwar zweckmäßigerweise so ausgerichtet, dass die Wurzel-Längsachsen 7a etwa in einem Winkel von 25° zur Umfangsrichtung 8 stehen und die Oberteil-Längsachsen 6a diagonal in einem Winkel von etwa 45° zur Umfangsrichtung 8 verlaufen und somit neben der Längskraftübertragung auch der Querkraftübertragung dienen.

Entsprechend der Drehsinnbindung des gezeigten Reifenprofiles ist hier auch die Bespikung der Schultern S drehsinnabhängig gestaltet. Dies folgt der Erkenntnis, dass für die Fahrsicherheit Bremsvermögen wichtiger ist als Traktion und Beschleunigungsvermögen und, dass eine gute Spurhaltung beim Bremsen noch wichtiger ist als beim Beschleunigen. Die drehsinngebundene Bespikung ist dadurch erreicht, dass in der einen Reifenschulter S die Oberteil-Längsachse 6a rechtsherum aus der Umfangsrichtung 8 herausgedreht ist und in der gegenüberliegenden Reifenschulter S mit Spikes, bei denen die Oberteil-Längsachse 6a linksherum aus 8 herausgedreht ist. Dadurch erhält man eine optimale Kraftaufnahme sowohl bei Geradeausfahrt als auch bei Kurvenfahrten nach links oder rechts und die Rangreihenfolge der Sicherheitsaspekte ist perfekt eingehalten.

Allerdings ist ein solcher Reifen teurer als ein herkömmlicher, nicht nur deshalb, weil erfindungsgemäße Spikes aufwändiger herzustellen sind, etwas schwieriger einzuschießen sind und Aufwand für die richtige Ausrichtung erfordern, sondern auch, weil bei dieser ausgefeiltesten Ausführung gemäß Figur 5 gleich drei verschiedene Spiketypen hergestellt und bevorratet werden müssen, nämlich solche mit 70°-Verschränkung nach rechts, solche mit 90°-Verschränkung und solche mit 70°-Verschränkung nach links.

In allen Fällen werden die vermehrt vom Untergrunde aufgenommenen Kräfte zuverlässig durch die gegenüber einer 90°-Verschränkung stärker in Laufrichtung orientierten Wurzeln 2 in die Lauffläche und das Gürtelpaket eingeleitet.

Im Unterschied zu den bis heute an Spikereifen üblichen Spikes mit in der Draufsicht sowohl kreisrunder Wurzel als auch kreisrundem Oberteil muss beim Einschießen erfindungsgemäßer Spikes für jeden Spike die richtige Ausrichtung zur Reifenumfangsrichtung vorgegeben werden. Dazu sollten die Spikes vor ihrem Auftreffen auf der Lauffläche durch ein Führungssystem geleitet werden, um die Spikes in den Reifen in den richtigen Ausrichtungen (in den vorgegebenen Winkeln 0°, 90° oder 45° oder in beliebigen Winkeln) einzuschießen. Ein wesentlicher Bestandteil eines solchen Systemes sind im Querschnitt unrunde Rohre.

Sofern - wie bevorzugt - die Breitachse 7b der Spikewurzel 2 oder 2a länger oder gleichlang ist wie die Längsachse 6a des Oberteiles 4, 5, wird dies durch eine die jeweilige Spikewurzel mit nur leichtem Spiel umhüllende Querschnittsgestalt der Einschussrohre und ggf. Zuführungsrohre erreicht.

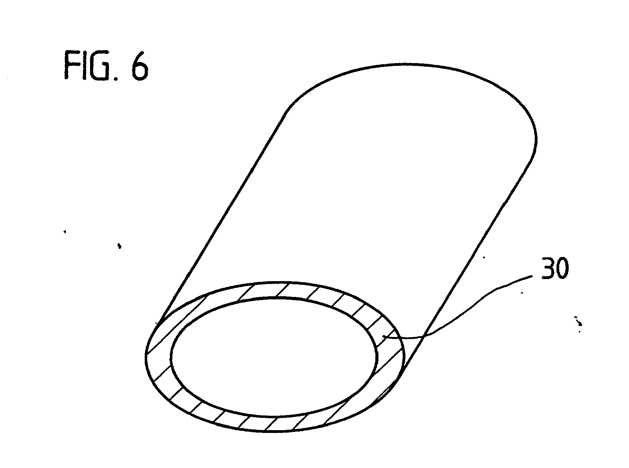

**Figur 6** zeigt ein solches Rohr 30 im Querschnitt mit einer ellipsenförmigen Querschnittsfläche, wodurch sich dieses Rohr als Vorrichtung zum Montieren von Spikes gemäß Figur 4 eignet unabhängig vom Verschränkungswinkel zwischen Oberteil und Wurzel der zu montierenden Spikes. Zum Einschießen von Spikes entsprechend der Figur 3 ist dementsprechend ein Rohr von ovalem Querschnitt bevorzugt.

Wenn aber an den zu montierenden Spikes 7b kleiner als 6a ist, dann wird die Ausrichtbarkeit durch eine im Querschnitt etwa 4-fach-kleeblattförmige Gestalt der Einschussrohre erreicht. Auch die Zuführungsrohre können so gestaltet sein. Es geht auch hierbei darum, dass der lichte Rohrquerschnitt möglichst genau dem Umriss des zu montierenden Spiketyps entspricht, dabei aber zur Vermeidung eines Festklemmens nirgends enger ist als dieser Umriss.

Im folgenden Bestandteil der Beschreibung werden alle in den Figuren verwendeten Bezugszeichen aufgelistet und teilweise weiter erläutert:
1 erfindungsgemäßer Spike im allgemeinen
   1a Spike 1 in Figur 5 mit zueinander senkrechter Ausrichtung der Längsachsen 6a und 7a von Oberteil bzw. Wurzel
   1b Spike 1 in Figur 5 mit von 90° abweichender (=verschränkter) Ausrichtung der Längsachsen 6a und 7a von Oberteil bzw. Wurzel
2 Wurzel von 1 in den Figuren 1-3 und 5
   2a Wurzel von 1 in Figur 4
3 Halsteil von 1 zwischen 2 und 4
4 dickerer Teil von 1; sofern 5 vorhanden ist, kommt dieser Teil erst nach einigem Reifenabrieb in Straßenkontakt
5 Spitze von 4; eine solche Zuspitzung ist nicht notwendig, aber bevorzugt; wenn im Laufe des Reifenabriebes 5 abgeschliffen ist, so stellt sich an den sukzessive freigelegten Bereichen von 4 durch eine Konzentration des Abschleifvolumens auf die Grenze zwischen der Stirn- und der Mantelfläche von 4 von selber immer wieder eine solche Zuspitzung ein, die auch als gebrauchsbedingte "Fase" oder "Kantenbrechung bezeichnet werden könnte; im Neuzustande des Spikes wird 5 am zweckmäßigsten so gestaltet, wie sie sich im Gebrauch ohnehin schlussendlich einstellt, weil dies zur längsten Reifen- und Straßenlebensdauer führt
6a Längsachse des dickeren Teiles 4 oder des gesamten Oberteiles 4, 5 eines erfindungsgemäßen Spikes 1, also
   - die längstmögliche gerade Linie innerhalb der Draufsicht auf das Oberteil oder
   - der maximale Durchmesser durch das Oberteil von
   - 1 oder
   - die größte Erstreckung von 4 bzw. 4 und 5
   wobei mit allen drei Formulierungsvarianten das Gleiche gemeint ist
6b Breitachse des dickeren Teiles 4 oder des gesamten Oberteiles 4, 5 eines erfindungsgemäßen Spikes 1, also
   - die gerade Linie innerhalb der Draufsicht auf das Oberteil, die senkrecht zu 6a verläuft oder
   - der minimale Durchmesser durch das Oberteil von 1 oder
   - die kleinste Erstreckung von 4 bzw. 4 und 5
   wobei mit allen drei Formulierungsvarianten das Gleiche gemeint ist
7a Längsachse der Spike-Wurzel (2, 2a), also
   - die längstmögliche gerade Linie innerhalb der Draufsicht auf die Wurzel oder
   - der maximale Durchmesser durch die Wurzel 2 von 1 oder
   - die größte Erstreckung von 2
   wobei mit allen drei Formulierungsvarianten das Gleiche gemeint ist
7b Breitachse der Wurzel 2 oder 2a des Spikes 1, also
   - die gerade Linie innerhalb der Draufsicht auf die Wurzel, die senkrecht zu 7a verläuft oder
   - der minimale Durchmesser durch die Wurzel von 1 oder
   - die kleinste Erstreckung von 2
   wobei mit allen drei Formulierungsvarianten das Gleiche gemeint ist
8 Umfangsrichtung des Reifens
10 Der Winkel, um den der größte Durchmesser 6a des Oberteiles 4, 5 aus der Umfangsrichtung 8 des Reifens herausgedreht ist (nur in Figur 4 eingezeichnet, weil nur dort von 90° abweichend)
11 Der Winkel, um den der größte Durchmesser 7a der Wurzel 2a aus der Umfangsrichtung 8 des Reifens herausgedreht ist (nur in Figur 4 eingezeichnet, weil nur dort von 0° abweichend)
15 Verschränkungswinkel zwischen 6a und 7a für das erste Ausführungsbeispiel, dargestellt in Figur 3, dort 90° betragend
15a Verschränkungswinkel zwischen 6a und 7a für das zweite Ausführungsbeispiel, dargestellt in Figur 4, dort 70° betragend
20 Lauffläche eines Reifens (Figur 5)
30 Einschussrohr zur Montage erfindunggemäßer Spikes (siehe Figur 6)

## Patentansprüche

1. Nichtausfahrbarer Spike für die Lauffläche eines Fahrzeugreifens, insbesondere eines Winterreifens,
- mit einem in der Draufsicht unrunden, **längs einer Längsachse erstreckten** länglichen plattenförmigen Spikewurzel (2, 2a) und
- mit einem in der Draufsicht unrunden, **längs einer Längsachse erstreckten** länglichen Spikeoberteil (4, 5),
**dadurch gekennzeichnet,**
**dass**
- Spikewurzel (2, 2a) und Spikeoberteil (4, 5) gegeneinander verschränkt sind, so dass die Längsachse (7a) der Spikewurzel (2, 2a) mit der Längsachse (6a) des Spikeoberteils (4, 5) einen von Null abweichenden Winkel (15, 15a) einschließt.

2. Spike nach Anspruch 1, **dadurch gekennzeichnet, dass** der Winkel (15, 15a), den beide Längsachsen (6a, 7a) einschließen, zwischen etwa 65° und etwa 115°, vorzugsweise bei im Wesentlichen 90° liegt.

3. Spike nach Anspruch 1 oder 2, bei dem das Oberteil aus einem dickeren Spiketeil (4) und einer auf diesem sitzenden Spitze (5) besteht, und die Spitze (5) einen unrunden Querschnitt aufweist, wobei eine Längsachse der Spitze (5) zu der Längsachse des dickeren Teiles (4) im Wesentlichen parallel ausgerichtet ist.

4. Spike nach einem der voranstehenden Ansprüche, **dadurch gekennzeichnet, dass** eine Längserstreckung (6a) des dickeren Teiles (4) im Wesentlichen gleich einer Breitenerstreckung (7b) der Wurzel (2, 2a) ist.

5. Lauffläche (20) für Winterreifen für Kraftfahrzeuge
- mit mehreren im Reifen jeweils mittels einer Wurzel (2, 2a) verankerten, mit jeweils einem Oberteil (4) zumindest teilweise über die Lauffläche vorspringenden Spikes (1, 1a, 1b),
- die über die Breite und den Umfang der Lauffläche (20) verteilt angeordnet und nicht ausfahrbar sind,
- wobei die Spikes (1, 1a, 1b) eine in der Draufsicht unrunde, **längs einer Längsachse erstreckte** längliche plattenförmige Spikewurzel (2, 2a) aufweisen,
- mit einem in der Draufsicht unrunden, längs einer **Längsachse erstreckten** länglichen Spikeoberteil (4, 5),
**dadurch gekennzeichnet,**
**dass**
- die Spikewurzel (2, 2a) und das Spikeoberteil (4, 5) gegeneinander verschränkt sind, so dass die Längsachse (7a) der Spikewurzel (2, 2a) mit der Längsachse (6a) des Spikeoberteils (4, 5) einen von Null abweichenden Winkel (15, 15a) einschließt.

6. Lauffläche nach Anspruch 5, **dadurch gekennzeichnet, dass** die Spikes (1, 1a, 1b) nach einem der Ansprüche 2 bis 4 ausgebildet sind.

7. Lauffläche (20) nach Anspruch 5 oder 6, **dadurch gekennzeichnet, dass** für in Laufflächenmitte (M) angeordnete Spikes (1a) die Längsachsen (7a) der Wurzeln (2) im Wesentlichen in Umfangsrichtung (8) des Reifens ausgerichtet sind und die Längsachsen (6a) der Oberteile im Wesentlichen axial.

8. Lauffläche (20) nach Anspruch 5 oder 6, **dadurch gekennzeichnet, dass** in den Randbereichen (S) der Lauffläche (20) des Reifens Spikes (1b) angeordnet sind, bei denen jeweils die Längsachsen (7a, 6a) von Wurzel (2) und Spikeoberteil (4, 5) einen Winkel (15a) einschließen, der von 90° abweicht.

9. Lauffläche (20) nach Anspruch 5 oder 6, wobei die in der Lauffläche verankerten Spikes (1a, 1b) mehrere unterschiedliche Ausrichtungen der Wurzeln (2) aufweisen.

10. Verfahren zur Herstellung eines Winterreifens mit einer Lauffläche nach Anspruch 5 oder 6, wobei Spikes nach Vollendung des Rohlingsaufbaues in die - vorzugsweise noch unvulkanisierte - Lauffläche eingeschossen werden, die Schussrohre, in denen die Spikes vor dem Auftreffen auf die Laufflächenperipherie beschleunigt werden, einen solchen lichten Querschnitt haben, dass dieser Querschnitt die Draufsicht des jeweils zu montierenden Spikes mit knappem Spiele umgibt, um so den Spike verdrehsicher zu führen und in der richtigen Winkelstellung einzuschießen, **dadurch gekennzeichnet, dass** die Spikes nach Anspruch 1 ausgeführt sind.

## Claims

1. Non-retractable spike for the tread of a vehicle tyre, in particular a winter tyre,
- with an elongated plate-shaped spike root (2, 2a), which is non-circular in outline and made to extend along a longitudinal axis, and
- with an elongated spike upper part (4, 5), which is non-circular in outline and made to extend along a longitudinal axis,
**characterized in that**
- the spike root (2, 2a) and the spike upper part (4, 5) are crossed with respect to each other, so that the longitudinal axis (7a) of the spike root (2, 2a) forms an angle (15, 15a) that deviates from zero with the longitudinal axis (6a) of the spike upper part (4, 5).

2. Spike according to Claim 1, **characterized in that** the angle (15, 15a) which the two longitudinal axes (6a, 7a) form lies between approximately 65° and approximately 115°, preferably at substantially 90°.

3. Spike according to Claim 1 or 2, in which the upper part comprises a thicker spike part (4) and a tip (5) on top of that, and the tip (5) has a non-circular cross section, a longitudinal axis of the tip (5) being aligned substantially parallel to the longitudinal axis of the thicker part (4).

4. Spike according to one of the preceding claims, **characterized in that** a longitudinal extent (6a) of the thicker part (4) is substantially equal to a widthwise extent (7b) of the root (2, 2a).

5. Tread (20) for winter tyres for motor vehicles
- with a number of spikes (1, 1a, 1b), which are anchored in the tyre respectively by means of a root (2, 2a) and project at least partially beyond the tread respectively with an upper part (4),
- which spikes are arranged distributed over the width and the circumference of the tread (20) and are not retractable,
- the spikes (1, 1a, 1b) having an elongated plate-shaped spike root (2, 2a), which is non-circular in outline and made to extend along a longitudinal axis,
- with an elongated spike upper part (4, 5), which is non-circular in outline and made to extend along a longitudinal axis,
**characterized in that**
- the spike root (2, 2a) and the spike upper part (4, 5) are crossed with respect to each other, so that the longitudinal axis (7a) of the spike root (2, 2a) forms an angle (15, 15a) that deviates from zero with the longitudinal axis (6a) of the spike upper part (4, 5).

6. Tread according to Claim 5, **characterized in that** the spikes (1, 1a, 1b) are formed according to one of Claims 2 to 4.

7. Tread (20) according to Claim 5 or 6, **characterized in that**, for spikes (1a) arranged in the middle of the tread (M), the longitudinal axes (7a) of the roots (2) are aligned substantially in the circumferential direction (8) of the tyre and the longitudinal axes (6a) of the upper part are substantially axial.

8. Tread (20) according to Claim 5 or 6, **characterized in that** spikes (1b) for which the longitudinal axes (7a, 6a) of the root (2) and the spike upper part (4, 5) respectively form an angle (15a) that deviates from 90° are arranged in the edge regions (S) of the tread (20) of the tyre.

9. Tread (20) according to Claim 5 or 6, the spikes (1a, 1b) anchored in the tread having a number of different alignments of the roots (2).

10. Method for producing a winter tyre with a tread according to Claim 5 or 6, spikes being fired into the - preferably still unvulcanized - tread after completion of the building of the blank, the firing tube in which the spikes are accelerated before they hit the periphery of the tread having such a clear cross section that this cross section surrounds with little play the outline of the spike respectively to be fitted, in order in this way to guide the spike such that it does not twist and it can be fired in the correct angular position, **characterized in that** the spikes are formed according to Claim 1.

## Revendications

1. Clou inamovible pour la surface de roulement d'un bandage pour véhicule, en particulier d'un bandage d'hiver, qui présente une racine allongée (2, 2a) en forme de plaque qui s'étend le long d'un axe longitudinal et non circulaire dans une vue en plan, et une partie supérieure allongée (4, 5) de clou qui s'étend le long de l'axe longitudinal et non circulaire dans une vue en plan,
**caractérisé en ce que**
- la racine (2, 2a) du clou et la partie supérieure (4, 5) du clou sont rétrécies l'une par rapport à l'autre de sorte que l'axe longitudinal (7a) de la racine (2, 2a) du clou forme avec l'axe longitudinal (6a) de la partie supérieure (4, 5) du clou un angle (15, 15a) différent de zéro.

2. Clou selon la revendication 1, **caractérisé en ce que** l'angle (15, 15a) que les deux axes longitudinaux (6a, 7a) forment est compris entre environ 65° et environ 115° et est de préférence essentiellement de 90°.

3. Clou selon les revendications 1 ou 2, dans lequel la partie supérieure est constituée d'une partie plus épaisse (4) du clou et d'une pointe (5) posée sur celle-ci, la pointe (5) présentant une section transversale non circulaire et l'axe longitudinal de la pointe (5) étant orienté essentiellement en parallèle à l'axe longitudinal de la partie plus épaisse (4).

4. Clou selon l'une des revendications précédentes, **caractérisé en ce que** l'extension en longueur (6a) de la partie plus épaisse (4) est essentiellement égale à l'extension en largeur (7b) de la racine (2, 2a).

5. Surface de roulement (20) pour bandage d'hiver de véhicules automobiles, qui présente plusieurs clous (1, 1a, 1b) ancrés chacun au moyen d'une racine (2, 2a) et débordant chacun au moins en partie de la surface de roulement par une partie supérieure (4),
- les clous étant répartis sur la largeur et la périphérie de la surface de roulement (20) et étant inamovibles,
- les clous (1, 1a, 1b) présentant une racine allongée (2, 2a) en forme de plaque qui s'étend le long d'un axe longitudinal et non circulaire dans une vue en plan, ainsi qu'une partie supérieure allongée (4, 5) qui s'étend le long d'un axe longitudinal et non circulaire dans une vue en plan,
**caractérisée en ce que**
- la racine (2, 2a) du clou et la partie supérieure (4, 5) du clou sont rétrécies l'une par rapport à l'autre de sorte que l'axe longitudinal (7a) de la racine (2, 2a) du clou forme avec l'axe longitudinal (6a) de la partie supérieure (4, 5) du clou un angle (15, 15a) différent de zéro.

6. Surface de roulement selon la revendication 5, **caractérisée en ce que** les clous (1, 1a, 1b) sont configurés selon l'une des revendications 2 à 4.

7. Surface de roulement (20) selon les revendications 5 ou 6, **caractérisée en ce que** pour les clous (1a) disposés au milieu (M) de la surface de roulement, l'axe longitudinal (7a) de la racine (2) est orienté essentiellement dans la direction périphérique (8) du bandage et l'axe longitudinal (6a) de la partie supérieure est essentiellement axial.

8. Surface de roulement (20) selon les revendications 5 ou 6, **caractérisée en ce que** des clous (1b) dont les axes longitudinaux (7a, 6a) de la racine (2) et de la partie supérieure (4, 5) du clou forment un angle (15a) différent de 90° sont disposés dans les bordures (S) de la surface de roulement (20) du bandage.

9. Surface de roulement (20) selon les revendications 5 ou 6, dans laquelle les racines (2) des clous (1a, 1b) ancrées dans la surface de roulement présentent différentes orientations.

10. Procédé de fabrication d'un bandage d'hiver qui présente une surface de roulement selon les revendications 5 ou 6, dans lequel des clous sont enfoncés dans la surface de roulement, de préférence encore non vulcanisée, après que le montage de l'ébauche est terminée, les tubes de tir dans lesquels les clous sont accélérés avant de venir percuter la périphérie de la surface de roulement ayant une section transversale intérieure telle que cette section transversale entoure avec un jeu étroit en vue en plan le clou à monter, pour ainsi guider le clou en l'empêchant de tourner et le tirer dans la position angulaire correcte, **caractérisé en ce que** les clous sont configurés selon la revendication 1.
